# EUROPEAN PATENT SPECIFICATION

(11) **EP 3 425 976 B1**
(45) Date of publication and mention of the grant of the patent: **04.08.2021**
(21) Application number: 17759063.5
(22) Date of filing: 03.01.2017
(51) Int. Cl.: H04W 76/10

(54) **CONTROL METHOD AND APPARATUS FOR RADIO RESOURCE MANAGEMENT (RRM)**
STEUERUNGSVERFAHREN UND -VORRICHTUNG ZUR FUNKRESSOURCENVERWALTUNG (RRM)
PROCÉDÉ ET APPAREIL DE COMMANDE POUR UNE GESTION DE RESSOURCE RADIO (RRM)

(30) Priority: 29.02.2016 CN 201610115633
(43) Date of publication of application: 09.01.2019
(73) Proprietor: ZTE Corporation, Shenzhen, Guangdong 518057 (CN)
(72) Inventor: YANG, Li, Shenzhen, Guangdong 518057 (CN)
(74) Representative: Aipex B.V.
(86) International application number: PCT/CN2017/000060
(87) International publication number: WO 2017/148212

(56) References cited:
- EP-A1- 2 887 705
- WO-A1-2011/123755
- WO-A1-2016/024972
- CN-A- 101 188 801
- CN-A- 102 740 397
- CN-A- 103 179 558
- CN-A- 103 379 581
- US-A1- 2013 148 607
- US-A1- 2013 155 894
- US-A1- 2013 250 771

## Description

### TECHNICAL FIELD

The present invention relates to the field of communications, and in particular, to a method and an apparatus for controlling radio resource management (RRM).

### BACKGROUND

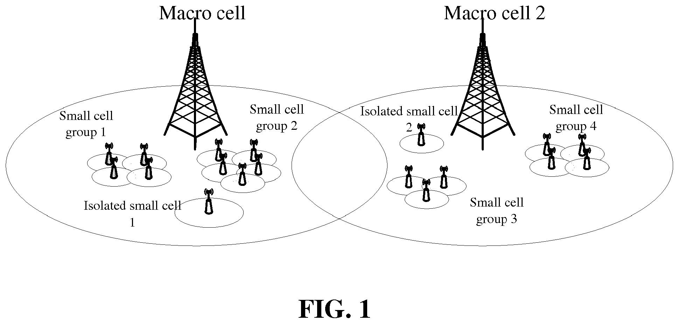

Supported by whatever radio access technology (RAT), any kind of mobile cellular system (including various network element nodes and terminal devices on the network side) is composed of basic network element nodes of a cellular mobile network and the most basic coverage unit, a cell, for providing mobile communication services/data transmission. The basic network element nodes of the cellular mobile network include a core network (CN), a gateway (GW), a radio network controller (RNC)/Access Network (AN), base station (eNB), a wireless access point (AP)/transmission point (TP), and a terminal (user equipment (UE)/Station (STA)). FIG. 1 is a schematic diagram of a mobile cellular network composed of macro and micro base stations (macro and micro cells) according to the existing art. Information described below is shown in FIG. 1.

Cell downlink coverage: an effective transmission range achievable by the base station node (eNB, AP, etc.) with controllable downlink data.

Cell downlink load: an extent of use and occupation of current downlink air interface radio resources of the base station node.

Cell uplink coverage: an effective transmission range achievable by the terminal (UE, STA, etc.) with controllable uplink data; the Cell uplink coverage may be different from the Cell downlink coverage.

Cell uplink load: an extent of use and occupation of current uplink air interface radio resources of the base station node.

In addition to the above-mentioned common radio resource management (RRM) measurement related to a serving cell, other related proprietary RRM measurement quantities that characterizes individual UEs being served, such as a peak rate, average throughput, data transmission delay, success rate of channel preemption, are provided. These RRM measurement parameters can reflect the state of individual UEs allocated and scheduled by the base station to use radio resources.

The network element node of the cellular network allocates related baseband/radio frequency/radio resources for various types of user services of the terminal, and configures corresponding data radio bearers (DRBs). To achieve Quality of Service (QoS) continuity of DRB-related user service in the mobile process, and to achieve equalized/reasonable use of uplink and downlink radio resources between base stations, the base station control node performs mobility control over reselection/redirection/switching/data distribution of the terminal in homogeneous and heterogeneous macro and micro cells through a specific mobility procedure. In a broader sense, the above base station control node may further include various upstream nodes of the network and managing downstream base station nodes, such as a radio network controller (RNC), a wireless gateway, a core network mobility management entity (MME). To simplify the description, the base station (a wireless node) is uniformly used for description below.

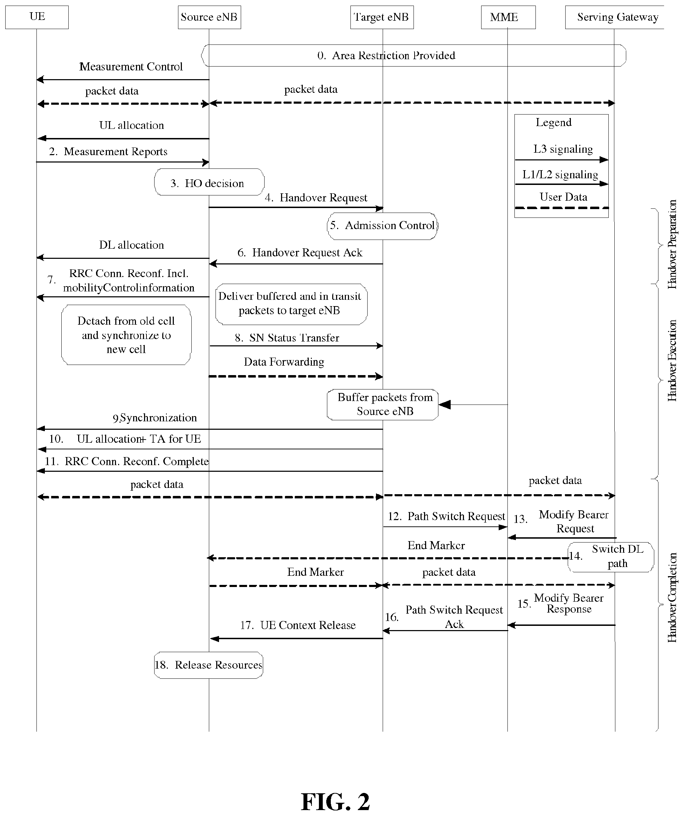

For example, FIG. 2 is a handover procedure for a UE between eNBs under a same core network element according to the existing art. As shown in FIG. 2, in a Long-Term Evolution (LTE) cellular system, after receiving a measurement report (MR) from the terminal UE, the source serving base station eNB sequentially performs operations of handover preparation, handover execution and handover complete according to a decision result of the handover decision (HO decision) module. The content of the MR is generated by the UE through a comparative analysis/evaluation of related parameters (such as a threshold, a period, an offset) of the RRM measurement quantities configured by the source serving base station eNB to the UE through the proprietary RRC signaling, and the dynamic measurement quantities obtained by the actual measurement of the UE locally. The UE may trigger the reporting of the RRM measurement content result in a periodic and/or event manner to make a reference for the handover decision for the source serving eNB. The proprietary RRC signaling is usually transmitted on a proprietary signaling radio bearer (SRB) between the source serving base station eNB and the UE. For example, in step 1, the source base station eNB (equivalent to the above source serving base station) delivers configuration information related to the RRM measurement to the UE on the proprietary SRB. In step 2, the UE submits result information of the RRM measurement to the source base station eNB on the proprietary SRB. In step 7, the source base station eNB delivers a command relating to handover and configuration information related to the target cell on the proprietary SRB. The detailed description of other steps may be referred to specification 36.300 of the 3rd Generation Partnership Project (3GPP) protocol.

In the existing art, no effective solutions exist currently for a problem in which the control signaling for grouped UEs has same purpose and content while the control data is repeatedly transmitted on each proprietary SRB, leading to additional signaling overhead.

The document US 2013/0250771 A1 proposes public safety networks which can benefit from device to device enhanced voice group call.

### SUMMARY

According to the invention, a method according to claim 1, a method according to claim 5, an apparatus according to claim 9 and an apparatus according to claim 13 are provided. Further improvements and embodiments are provided in the dependent claims.

An aspect of the present invention provides a method for controlling RRM, including steps described below.

An base station establishes a UE group for multiple terminals in an RRC connected state.

The base station establishes a common group signaling radio bearer (Group-SRB) for the UE group.

The base station sends configuration information to the multiple terminals in downlink transmission on multiple dedicated SRBs for respective terminals in the UE group, where the configuration information includes configuration information for establishing the common Group-SRB.

The base station sends common control information of the UE group in downlink transmission on the common Group-SRB.

Optionally, the step in which the base station establishes the UE group for the multiple terminals in the RRC connected state includes a step described below.

The base station establishes the UE group according to common information of the multiple terminals in the RRC connected state.

The common information includes at least one of: RRM parameter configuration information, resource consumption information, mobile migration information, and physical and logical association information.

Optionally, after the base station establishes the UE group for the multiple terminals in the RRC connected state, the method further includes a step described below.

A master UE is selected from the multiple terminals in the UE group, where the master UE is configured to be an auxiliary control node and/or an uplink control feedback gathering anchor point for group control of the multiple terminals.

Optionally, the configuration information of the common Group-SRB includes at least one of:
identifier information and resource configuration information of a common control channel (CCCH), a downlink shared channel (DL-SCH) or a physical downlink shared channel (PDSCH) corresponding to the common Group-SRB;
a common identity (ID) identifier of the UE group; and
information of a master UE, where the base station selects the master UE from the multiple terminals in the UE group, the master UE is configured to be an auxiliary control node and/or an uplink control feedback gathering anchor point for group control of the multiple terminals.

Optionally, the common control information includes at least one of: resource configuration information of the UE group, RRM parameter configuration information of the UE group, and mobile migration information of the UE group.

Optionally, after the base station establishes the common Group-SRB for the UE group, the method further includes a step described below.

The base station sends proprietary-class customization control information to the multiple terminals in downlink transmission on the multiple dedicated SRBs for respective terminals in the UE group, where the proprietary-class customization control information includes at least one of: resource reconfiguration information of the UE group, RRM parameter configuration information of the UE group, and mobile migration information of the UE group.

Another aspect of the present invention further provides a method for controlling RRM, including steps described below.

A terminal receives configuration information for establishing a common Group-SRB sent by an base station in downlink transmission on a dedicated SRB for the terminal, where the common Group-SRB is established for a UE group containing the terminal, and the UE group includes multiple terminals in a RRC connected state.

The terminal receives common control information of the UE group sent by the base station in downlink transmission on the common Group-SRB.

Optionally, the configuration information of the common Group-SRB includes at least one of:
identifier information and resource configuration information of a CCCH, a DL-SCH, or a PDSCH corresponding to the common Group-SRB;
a common ID identifier of the UE group; and
information of a master UE, where the base station selects the master UE from the multiple terminals in the UE group, where the master UE is configured to be an auxiliary control node and/or an uplink control feedback gathering anchor point for group control of the multiple terminals.

Optionally, after the terminal receives the common control information of the UE group sent by the base station in downlink transmission on the common Group-SRB, the method further includes a step described below.

The terminal performs a common action according to the common control information, where the common action includes at least one of: RRM parameter reconfiguration, resource reconfiguration and mobile migration.

Optionally, after the terminal receives the common control information of the UE group sent by the base station in downlink transmission on the common Group-SRB, the method includes a step described below.

The terminal sends control information for feedback in downlink transmission on a dedicated SRB for the terminal.

Optionally, after the multiple terminals in the UE group receive the common control information of the UE group sent by the base station in downlink transmission on the common Group-SRB, the method further includes steps described below.

In a case where the terminal is the master UE, the terminal performs data transmission with other terminals among the multiple terminals in the UE group through a local data transmission mechanism, where the other terminals send the control information for feedback in uplink to the master UE, the master UE gathers the control information for feedback and send the control information for feedback in uplink transmission.

In the case where the terminal is not the master UE, the terminal performs data transmission with the master UE through the local data transmission mechanism, where the terminal sends the control information for feedback in uplink is sent to the master UE, the master UE gathers the control information for feedback and sends the control information for feedback in uplink transmission.

Optionally, after the terminal receives the common control information of the UE group sent by the base station in downlink transmission on the common Group-SRB, the method further includes a step described below.

After a proprietary SRB for the terminal is released from radio resource connection RRC or after the terminal determines based on a specific condition that the terminal has detached from the UE group in a physical relationship or a logical relationship, the terminal releases association between the terminal and the common Group-SRB, where the terminal no longer receives the common control information from the common SRB and no longer sends information for feedback in uplink to the master UE.

Another aspect of the present invention further provides an apparatus for controlling RRM. The apparatus is located in an base station and includes modules an identification module, an establishment module, a first transmission module and a second transmission module.

The identification module is configured to establish a UE group for multiple terminals in an RRC connected state.

The establishment module is configured to establish a common Group-SRB for the UE group.

The first transmission module is configured to send configuration information to the multiple terminals in downlink transmission on multiple dedicated SRBs for respective terminals in the UE group, where the configuration information includes configuration information for establishing the common Group-SRB.

The second transmission module is configured to send common control information of the UE group in downlink transmission on the common Group-SRB.

Optionally, the identification module establishes the UE group according to common information of the multiple terminals in the RRC connected state.

The common information includes at least one of: RRM parameter configuration information, resource consumption information, mobile migration information, and physical and logical association information.

Optionally, a selection module is configured to select a master UE from the multiple terminals in the UE group after the identification module establishes the UE group for the multiple terminals in the RRC connected state, where the master UE is configured to be an auxiliary control node and/or an uplink control feedback gathering anchor point for group control of the multiple terminals.

Optionally, the configuration information of the common Group-SRB includes at least one of:
identifier information and resource configuration information of a CCCH, a DL-SCH or a PDSCH corresponding to the common Group-SRB;
a common ID identifier of the UE group; and
information of a master UE, where the base station selects the master UE from the multiple terminals in the UE group, where the master UE is configured to be an auxiliary control node and/or an uplink control feedback gathering anchor point for group control of the multiple terminals.

Optionally, the common control information includes at least one of: resource configuration information of the UE group, RRM parameter configuration information of the UE group, and mobile migration information of the UE group.

Optionally, the apparatus further includes a third transmission module.

The third transmission module is configured to send proprietary-class customization control information to the multiple terminals in downlink transmission on the multiple dedicated SRBs for respective terminals in the UE group, where the proprietary-class customization control information includes at least one of: resource reconfiguration information of the UE group, RRM parameter configuration information of the UE group, and mobile migration information of the UE group.

Another aspect of the present invention further provides an apparatus for controlling RRM. The apparatus is located in a terminal and including a first receiving module and a second receiving module.

The first receiving module is configured to receive configuration information for establishing a common Group-SRB sent by an base station in downlink transmission on a dedicated SRB for the terminal, where the common Group-SRB is established by a UE group containing the terminal, and the UE group includes multiple terminals in an RRC connected state.

The second receiving module is configured to receive common control information of the UE group sent by the base station in downlink transmission on the common Group-SRB.

Optionally, the configuration information of the common Group-SRB includes at least one of:
identifier information and resource configuration information of a CCCH, a DL-SCH, or a PDSCH corresponding to the common Group-SRB;
a common ID identifier of the UE group; and
information of a master UE, where the base station selects the master UE from the multiple terminals in the UE group, where the master UE is configured to be an auxiliary control node and/or an uplink control feedback gathering anchor point for group control of the multiple terminals.

Optionally, the apparatus further includes a common action module.

The common action module is configured to perform a common action according to the common control information after the second receiving module receives the common control information of the UE group sent by the base station in downlink transmission on the common Group-SRB, where the common action including at least one of: RRM parameter reconfiguration, resource reconfiguration and mobile migration.

Optionally, the apparatus further includes an uplink transmission module.

The uplink transmission module is configured to send control information for feedback in uplink transmission on the dedicated SRB of the terminal after the second receiving module receives the common control information of the UE group sent by the base station in downlink transmission on the common Group-SRB.

Optionally, the apparatus further includes a local transmission module.

After the multiple terminals in the UE group receive the common control information of the UE group sent by the base station in downlink transmission on the common Group-SRB,
in a case where the terminal is the master UE, the local transmission module is configured to enable the terminal to perform data transmission with other terminals among the multiple terminals in the UE group through a local data transmission mechanism, where the other terminals send the control information for feedback in uplink to the master UE, the master UE gathers the control information for feedback and sends the control information for feedback in uplink transmission; and
in a case where the terminal is not the master UE, the local transmission module is configured to enable the terminal to perform data transmission with the master UE through the local data transmission mechanism, where the terminal sends the control information for feedback in uplink to the master UE, the master UE gathers the control information for feedback and sends the control information for feedback in uplink transmission.

Optionally, the apparatus further includes a releasing module.

After the terminal receives the common control information of the UE group sent by the base station in downlink transmission on the common Group-SRB, and after a proprietary SRB for the terminal is released from the radio resource connection RRC or after the terminal determines based on a specific condition that the terminal has detached from the UE group in a physical relationship or a logical relationship, the releasing module is configured to enable the terminal to release association between the terminal and the common Group-SRB, where no longer receives the common control information from the common SRB and no longer sends information for feedback in uplink to the master UE.

Through the present invention, the base station establishes the UE group for multiple terminals in the RRC connected state; the base station establishes the common Group-SRB for the UE group; the base station sends the configuration information to the multiple terminals in downlink transmission on multiple dedicated SRBs for respective terminals in the UE group, where the configuration information includes configuration information for establishing the common Group-SRB; and the base station sends the common control information of the UE group in downlink transmission on the common Group-SRB. This solves the problem in which the control signaling for grouped UEs has same purpose and content while the control data is repeatedly transmitted on each proprietary SRB, leading to additional signaling overhead. By using a common SRB and taking advantages of characteristics of grouped UEs, a single copy of control data can be transmitted for controlling multiple UEs.

### BRIEF DESCRIPTION OF DRAWINGS

The accompanying drawings described herein are used to provide a further understanding of the present invention, and form a part of the present application. The exemplary embodiments and descriptions thereof in the present invention are used to explain the present invention and do not limit the present invention in an improper way. In the accompanying drawings:
FIG. 1 is a schematic diagram of a mobile cellular network composed of macro and micro base stations (macro and micro cells) according to the existing art;
FIG. 2 is a handover procedure for a UE between eNBs under a same core network element according to the existing art;
FIG. 3 is a flowchart 1 of a method for controlling RRM according to an embodiment of the present invention;
FIG. 4 is a flowchart 2 of a method for controlling RRM according to an embodiment of the present invention;
FIG. 5 is a structural block diagram 1 of an apparatus for controlling RRM according to an embodiment of the present invention;
FIG. 6 is a structural block diagram 2 of an apparatus for controlling RRM according to an embodiment of the present invention;
FIG. 7 is a schematic diagram of an RRM clustered control model based on a common Group-SRB according to a preferred embodiment of the present invention;
FIG. 8 is a schematic diagram 1 of a group control intra-LTE system handover of grouped UEs composed of three UEs performed by an LTE macro base station according to a preferred embodiment of the present invention;
FIG. 9 is a schematic diagram 2 of a group control intra-LTE system handover of grouped UEs composed of three UEs performed by an LTE macro base station according to a preferred embodiment of the present invention; and
FIG. 10 is a schematic diagram of a group control inter-system handover of grouped UEs composed of four UEs performed by a 5G new RAT micro base station according to a preferred embodiment of the present invention.

### DETAILED DESCRIPTION

The present invention will be described in detail with reference to the accompanying drawings in conjunction with the embodiments. It is to be noted that if not in collision, the embodiments and features therein in the present application may be combined with each other.

It is to be noted that the terms "first", "second" and the like in the description, claims and above accompanying drawings of the present invention are used to distinguish between similar objects and are not necessarily used to describe a particular order or sequence.

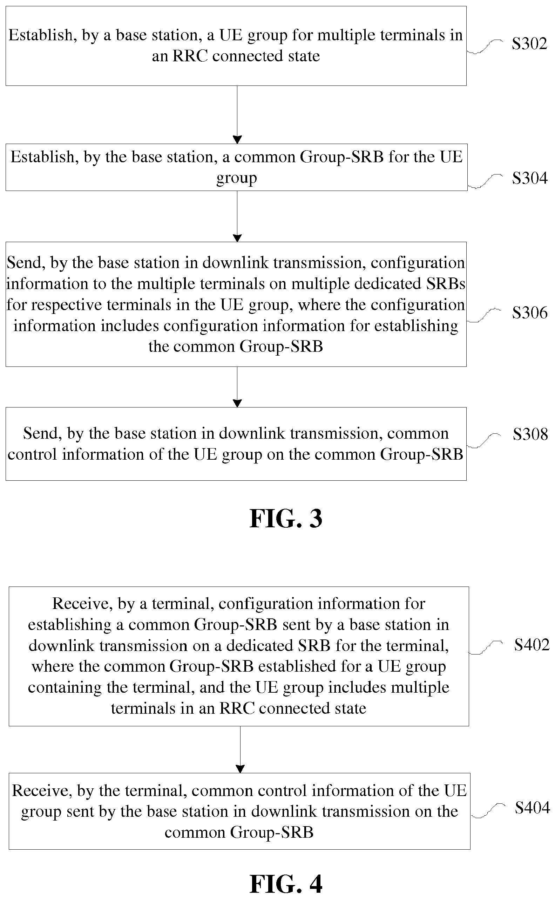

An embodiment provides a method for controlling RRM. FIG. 3 is a flowchart 1 of a method for controlling RRM according to an embodiment of the present invention. As shown in FIG. 3, the process of the method includes the steps described below.

In S302, an base station establishes a UE group for multiple terminals in an RRC connected state.

In S304, the base station establishes a common Group-SRB for the UE group.

In S306, the base station sends configuration information to the multiple terminals in downlink transmission on multiple dedicated SRBs for respective terminals in the UE group; where the configuration information includes configuration information for establishing the common Group-SRB.

In S308, the base station sends common control information of the UE group in downlink transmission on the common Group-SRB.

Through the above steps, the base station establishes the UE group for multiple terminals in the RRC connected state; the base station establishes the common Group-SRB for the UE group; the base station sends the configuration information to the multiple terminals in downlink transmission on multiple dedicated SRBs for respective terminals in the UE group, where the configuration information includes the configuration information for establishing the common Group-SRB; and the base station sends the common control information of the UE group in downlink transmission on the common Group-SRB. This solves the problem in which the control signaling for grouped UEs has same purpose and content while the control data is repeatedly transmitted on each proprietary SRB, leading to additional signaling overhead. By using a common SRB and taking advantages of characteristics of grouped UEs, a single copy of control data can be transmitted for controlling multiple UEs.

In the embodiment of the present invention, the step in which the base station establishes the UE group in the RRC connected state includes a step described below.

The base station establishes the UE group according to common information of the multiple terminals in the RRC connected state. The common information includes at least one of: RRM parameter configuration information, resource consumption information and mobile migration information. The base station may establish one or more UE groups.

In the embodiment of the present invention, after establishing the UE group for the multiple terminals in the RRC connected state, the base station selects a master UE from the multiple terminals in the UE group. The master UE is configured to be an auxiliary control node and/or an uplink control feedback gathering anchor point for group control of the multiple terminals. The master UE may be selected from the multiple terminals in the UE group by using an implementation algorithm of the base station.

In the embodiment of the present invention, the configuration information of the common Group-SRB includes at least one of: identifier information and resource configuration information of a CCCH, a DL-SCH, or a PDSCH corresponding to the common Group-SRB; a common ID identifier of the UE group; and information of a master UE, where the base station selects the master UE from the multiple terminals in the UE group, the master UE is configured to be an auxiliary control node and/or an uplink control feedback gathering anchor point for group control of the multiple terminals.

In the embodiment of the present invention, the common control information includes at least one of: Resource configuration information of the UE group, RRM parameter configuration information of the UE group, and mobile migration information of the UE group.

In the embodiment of the present invention, after establishing the common Group-SRB for the UE group, the base station sends proprietary-class customization control information to the multiple terminals in downlink transmission on multiple dedicated SRBs for respective terminals in the UE group. The proprietary-class customization control information includes at least one of: resource reconfiguration information of the UE group, the RRM parameter configuration information of the UE group, and the mobile migration information of the UE group.

An embodiment provides a method for controlling RRM. FIG. 4 is a flowchart 2 of a method for controlling RRM according to an embodiment of the present invention. As shown in FIG. 4, the process of the method includes the steps described below.

In S402, a terminal receives configuration information for establishing a common Group-SRB sent by an base station in downlink transmission on a dedicated SRB for the terminal; where the common Group-SRB is established for a UE group containing the terminal, and the UE group includes multiple terminals in an RRC connected state.

In S404, the terminal receives common control information of the UE group sent by the base station in downlink transmission on the common Group-SRB.

Through the above steps, the terminal receives the configuration information for establishing the common Group-SRB sent by the base station in downlink transmission on the dedicated SRB for the terminal, where the common Group-SRB is established for the UE group containing the terminal, the UE group includes multiple terminals in the RRC connected state, and the terminal receives the common control information of the UE group sent by the base station in downlink transmission on the common Group-SRB. This solves the problem of imperfect control of RRM in a scenario of grouped terminals and improves the control of RRM

In the embodiment of the present invention, the configuration information of the common Group-SRB includes at least one of: identifier information and resource configuration information of a CCCH, a DL-SCH, or a PDSCH corresponding to the common Group-SRB; a common ID identifier of the UE group; and information of a master UE, where the base station selects the master UE from the multiple terminals in the UE group, the master UE is configured to be an auxiliary control node and/or an uplink control feedback gathering anchor point for group control of the multiple terminals.

In the embodiment of the present invention, after receiving the common control information of the UE group sent by the base station in downlink transmission on the common Group-SRB, the terminal performs a common action according to the common control information. The common action includes at least one of: RRM parameter reconfiguration, resource reconfiguration and mobile migration.

In the embodiment of the present invention, after receiving the common control information of the UE group sent by the base station in downlink transmission on the common Group-SRB, the terminal sends control information for feedback in uplink transmission on a dedicated SRB for the terminal.

In the embodiment of the present invention, after the multiple terminals in the UE group receive the common control information of the UE group sent by the base station in downlink transmission on the common Group-SRB, and in a case where the terminal is the master UE, the terminal performs data transmission with other terminals among the multiple terminals in the UE group through a local data transmission mechanism; the other terminals send the control information for feedback in uplink to the master UE, the master UE gathers the control information for feedback and send the control information for feedback in uplink transmission.

In a case where the terminal is not the master UE, the terminal performs data transmission with the master UE through the local data transmission mechanism; the terminal sends the control information for feedback in uplink to the master UE, the master UE gathers the control information for feedback and sends the control information for feedback in uplink transmission.

In the embodiment of the present invention, after the terminal receives the common control information of the UE group sent by the base station in downlink transmission on the common Group-SRB, after a proprietary SRB of the terminal is released from the radio resource connection RRC or after the terminal determines based on a specific condition that the terminal has detached from the UE group in a physical relationship or a logical relationship, the terminal releases association between the terminal and the common Group-SRB. The terminal no longer receives the common control information from the common SRB and no longer sends information for feedback in uplink to the master UE.

An embodiment of the present invention further provides an apparatus for controlling RRM, which is used for implementing the above-mentioned embodiments and preferred implementation modes. What has been described will not be repeated. As used hereinafter, a term "module" may be software, hardware or a combination thereof capable of implementing one or more preset functions. The apparatus in the embodiments described below is preferably implemented by software, but implementation by hardware or by a combination of software and hardware is also possible and conceived.

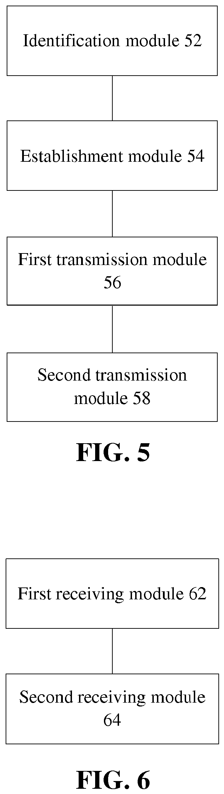

FIG. 5 is a structural block diagram 1 of an apparatus for controlling RRM located in an base station according to an embodiment of the present invention. As shown in FIG. 5, the apparatus includes an identification module 52, an establishment module 54, a first transmission module 56 and a second transmission module 58.

The identification module 52 is configured to establish a UE group for multiple terminals in an RRC connected state.

The establishment module 54 is configured to establish a common Group-SRB for the UE group.

The first transmission module 56 is configured to send configuration information to the multiple terminals in downlink transmission on multiple dedicated SRBs for respective terminals in the UE group, where the configuration information includes configuration information for establishing the common Group-SRB.

The second transmission module 58 is configured to send common control information of the UE group in downlink transmission on the common Group-SRB.

Through the above apparatus, the identification module 52 establishes the UE group for multiple terminals in the RRC connected state; the establishment module 54 establishes the common Group-SRB for the UE group; the first transmission module 56 sends the configuration information to the multiple terminals in downlink transmission on multiple dedicated SRBs for respective terminals in the UE group, where the configuration information includes the configuration information for establishing the common Group-SRB; and the second transmission module 58 sends the common control information of the UE group in downlink transmission on the common Group-SRB. This solves the problem in which the control signaling for grouped UEs has same purpose and content while the control data is repeatedly transmitted on each proprietary SRB, leading to additional signaling overhead. By using a common SRB and taking advantages of characteristics of grouped UEs, a single copy of control data can be transmitted for controlling multiple UEs.

In the embodiment of the present invention, the identification module 52 establishes the UE group according to common information of the multiple terminals in the RRC connected state. The common information includes at least one of: RRM parameter configuration information, resource consumption information, mobile migration information, and physical and logical association information.

In the embodiment of the present invention, the apparatus further includes a selection module.

The selection module is configured to select a master UE from the multiple terminals in the UE group after the identification module 52 establishes the UE group for the multiple terminals in the RRC connected state, where the master UE is configured to be an auxiliary control node and/or an uplink control feedback gathering anchor point for group control of the multiple terminals.

In the embodiment of the present invention, configuration information of the common Group-SRB includes at least one of:
identifier information and resource configuration information of a CCCH, a DL-SCH, or a PDSCH corresponding to the common Group-SRB;
a common ID identifier of the UE group; and
information of a master UE, where the base station selects the master UE from the multiple terminals in the UE group, the master UE is configured to be an auxiliary control node and/or an uplink control feedback gathering anchor point for group control of the multiple terminals.

In the embodiment of the present invention, the common control information includes at least one of: resource configuration information of the UE group, RRM parameter configuration information of the UE group, and mobile migration information of the UE group.

In the embodiment of the present invention, the apparatus further includes a third transmission module.

The third transmission module is configured to send proprietary-class customization control information to the multiple terminals in downlink transmission on the multiple dedicated SRBs for respective terminals in the UE group. The proprietary-class customization control information includes at least one of: resource reconfiguration information of the UE group, RRM parameter configuration information of the UE group, and mobile migration information of the UE group.

FIG. 6 is a structural block diagram 2 of an apparatus for controlling RRM located in a terminal according to an embodiment of the present invention. As shown in FIG. 6, the apparatus includes a first receiving module 62 and a second receiving module 64.

The first receiving module 62 is configured to receive configuration information for establishing a common Group-SRB sent by an base station in downlink transmission on a dedicated SRB for the terminal, where the common Group-SRB is established for a UE group containing the terminal, and the UE group includes multiple terminals in an RRC connected state.

The second receiving module 64 is configured to receive common control information of the UE group sent by the base station in downlink transmission on the common Group-SRB.

Through the above apparatus, the first receiving module 62 receives the configuration information for establishing the common Group-SRB sent by the base station in downlink transmission on the dedicated signaling radio bearer (SRB) corresponding to the terminal, where the common Group-SRB is established for the UE group containing the terminal, and the UE group includes multiple terminals in the RRC connected state; and the second receiving module 64 receives the common control information of the UE group sent by the base station in downlink transmission on the common Group-SRB. This solves the problem in which the control signaling for grouped UEs has same purpose and content while the control data is repeatedly transmitted on each proprietary SRB, leading to additional signaling overhead. By using a common SRB and taking advantages of characteristics of grouped UEs, a single copy of control data can be transmitted for controlling multiple UEs.

In the embodiment of the present invention, configuration information of the common Group-SRB includes at least one of:
identifier information and resource configuration information of a CCCH, a DL-SCH, or a PDSCH corresponding to the common Group-SRB;
a common ID identifier of the UE group; and
information of a master UE, where the base station selects the master UE from the multiple terminals in the UE group, the master UE is configured to be an auxiliary control node and/or an uplink control feedback gathering anchor point for group control of the multiple terminals.

In the embodiment of the present invention, the apparatus further includes a common action module.

The common action module is configured to perform a common action according to the common control information after the second receiving module 64 receives the common control information of the UE group sent by the base station in downlink transmission on the common Group-SRB. The common action includes at least one of: RRM parameter reconfiguration, resource reconfiguration and mobile migration.

In the embodiment of the present invention, the apparatus further includes an uplink transmission module.

The uplink transmission module is configured to send control information for feedback in uplink transmission on the dedicated SRB of the terminal after the second receiving module 64 receives the common control information of the UE group sent by the base station in downlink transmission on the common Group-SRB.

In the embodiment of the present invention, the apparatus further includes a local transmission module.

After the multiple terminals in the UE group receive the common control information of the UE group sent by the base station in downlink transmission on the common Group-SRB, in a case where the terminal is a master UE, the local transmission module is configured to enable the terminal to perform data transmission with other terminals among the multiple terminals in the UE group through a local data transmission mechanism. The other terminals send the control information for feedback in uplink to the master UE. The master UE gathers the control information for feedback and sends the control information for feedback in uplink transmission.

In a case where the terminal is not the master UE, the local transmission module is configured to enable the terminal to perform data transmission with the master UE through the local data transmission mechanism. The terminal sends the control information for feedback in uplink to the master UE. The master UE gathers the control information for feedback and sends the control information for feedback in uplink transmission.

In the embodiment of the present invention, the apparatus further includes a releasing module.

After the terminal receives the common control information of the UE group sent by the base station in downlink transmission on the common Group-SRB, after the proprietary SRB for the terminal is released from the RRC or after the terminal determines based on a specific condition that the terminal has detached from the UE group in a physical relationship or a logical relationship, the releasing module is configured to enable the terminal to release association between the terminal and the common Group-SRB. The terminal no longer receives the common control information from the common SRB, and no longer sends information for feedback in uplink to the master UE.

The present invention will be described in detail below in conjunction with preferred embodiments and implementation modes.

In the embodiment of the present invention, firstly the base station is provided with a grouped terminal object action identification module (corresponding to the identification module 52 in the above embodiment). This module uses its implementation algorithm to identify UEs in a RRC Connected state (or an equivalent connected state) which have common in RRM parameter configuration/resource consumption/mobile migration and may be associated and bound together.

Secondly, the base station uses its own implementation algorithm to select the master UE from the determined grouped UEs. The master UE serves as the auxiliary control node and the uplink control feedback anchor point for group control.

Optionally, a common Group-SRB is established between the base station and the grouped UEs, and related configuration information for establishing and maintaining the common Group-SRB, such as the related configuration information of the CCCH/DL-SCH/PDSCH corresponding to the common Group-SRB, the common ID identifier of the UE group, the selected master UE object, is sent in downlink transmission on the proprietary SRB configured for each UE.

Thereafter, when the base station needs to perform common actions such as common RRM parameter configuration/resource configuration/mobile migration on the grouped UEs, the related control information may be sent in downlink transmission on the common Group-SRB, and identical control information needs not be respectively transmitted to UEs on the proprietary SRBs for the UEs like before.

The UE group can identify that the control information carried on the common Group-SRB is directed to the UE group itself via the common ID identifier, and then receive and analyze the control information on the common Group-SRB in a manner similar to the original receiving and analysis of the control information on the proprietary SRB. To improve the success rate of reception, the control information carried on the common Group-SRB can improve the robustness of a receiver with respect to receiving and analysis by means of repeated transmission or diversity transmission.

The UE group further performs actions such as RRM collective parameter reconfiguration/resource reconfiguration/mobile migration according to the control information on the common Group-SRB, and the time for executing the result does not require complete synchronization.

The UE group may establish a direct local data transmission connection with the master UE through local data transmission mechanisms such as device-to-device (D2D), wireless local area network (WLAN), Bluetooth. Any control information in the UE group that needs to be sent to the base station for feedback in uplink transmission, may be transmitted on the original proprietary SRB. Alternatively, the control information may be transmitted to the master UE first; then the master UE gathers all information related to UEs in the UE group under the charge of the master UE and sends the information to the base station in uplink on the proprietary SRB of the master UE.

When the base station needs to perform actions such as proprietary-class customization RRM parameter configuration/resource reconfiguration/mobile migration on the grouped UEs, the proprietary configuration information is still sent in downlink transmission on the original proprietary SRBs.

After the proprietary SRB of a UE is released from the RRC connection (or the UE is not in the equivalent RRC connected state) or the UE determines based on a decision principle implemented by the UE that this UE has detached from the UE group in a physical relationship or a logical relationship, the UE automatically releases the association between the UE and the common Group-SRB, no longer receiving and analyzing the common control information on the common Group-SRB; and the UE automatically releases association between the UE and the master UE. If the detached UE is the master UE, the base station needs to update a selection and reconfigure a new master UE.

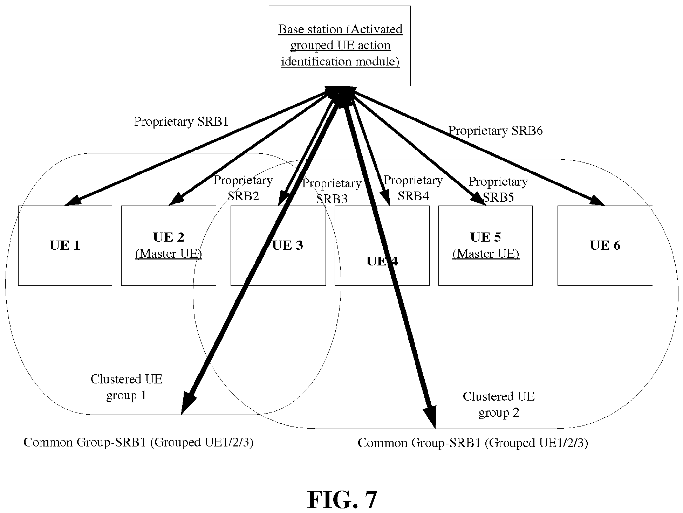

FIG. 7 is a schematic diagram of an RRM clustered control model based on a common Group-SRB according to a preferred embodiment of the present invention. As shown in FIG. 7, the common Group-SRB does not need to cover all cells wirelessly like a system broadcast message, but to cover a fixed local area like a proprietary SRB. The base station may simultaneously establish and maintain multiple common Group-SRBs for different UE groups. A same UE may belong to different grouped UE groups, and establish association with multiple common Group-SRBs for receiving and analysis.

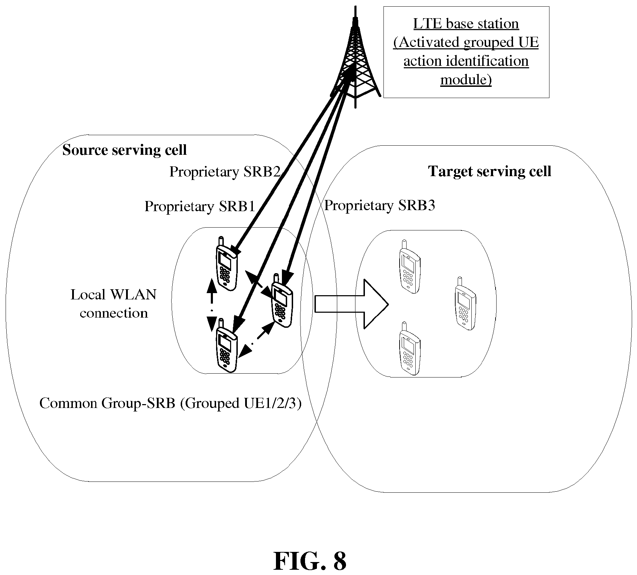

FIG. 8 is a schematic diagram 1 of a group control intra-LTE system handover of grouped UEs composed of three UEs performed by an LTE macro base station according to a preferred embodiment of the present invention. As shown in FIG. 8, under the coverage of a cell of an LTE macro base station, three UEs (UE1, UE2, and UE3) of three passengers exist in the same private car. Because of respective transmission requirements of different service data, UE1, UE2, and UE3 are already in the RRC_Connected state, and are configured with different DRBs (because the data services in progress of the users are different). The LTE macro base station is configured and activated with a grouped UE action identification module based on an internal implementation. Based on the RRM measurement report information and the historical moving trajectory information of UE1, UE2 and UE3, it is determined that the three UEs have a binding relationship in terms of spatial mobility, and therefore, it is decided to establish grouped UEs for UE1, UE2, and UE3. Specific steps are described below.

In S801, the base station uses its own implementation algorithm to select UE1 from the determined grouped UEs as the master UE serving as the auxiliary control node and the uplink control feedback anchor point for group control. The base station establishes a common Group-SRB for the grouped UEs. Related required configuration information for establishing the common Group-SRB is sent in downlink transmission on proprietary SRB1/SRB2/SRB3 configured for the three UEs respectively. The configuration information is for example resource configuration information related to LTE CCCH/DL-SCH/PDSCH corresponding to the common Group-SRB, a common ID identifier of the UE group (ID of grouped UE).

In S802, as time passes, the grouped UEs move physically and the macro cell handover is about to occur. At this time, the base station sends the related control information to the grouped UEs in downlink transmission on the common Group-SRB. The control information includes, but is not limited to:
configuration information of new resources of respective proprietary SRB1/SRB2/SRB3 of UE1/UE2/UE3 in a target cell;
configuration information of new resources of respective proprietary DRBs of UE1/UE2/UE3 in the target cell;
common-class RRM measurement report parameter configuration information of UE1/UE2/UE3; and
handover command information of UE1/UE2/UE3.

In S803, the UE group can identify that the control information on the common Group-SRB is for the UE group itself via the common ID identifier of the grouped UEs, and receive and analyze the control information on the common Group-SRB in a manner similar to the original receiving and analysis of the control information on the respective proprietary SRB. The UE group further performs actions such as RRM-related parameter reconfiguration/resource reconfiguration/mobile migration according to the control information content on the common Group-SRB, and the time for executing the result does not require complete synchronization, for example, UE1, UE2 and UE3 are sequentially handed over to the target cell.

In S804, the UE group establishes a direct local data transmission connection with the master UE through the local WLAN data transmission mechanism. Firstly, the result of the establishment of the new proprietary SRBs/DRBs of UE2/UE3 in the target cell is transmitted to the master anchor UE1. Then UE1 gathers all related configuration results of UE1 itself and UE2/UE3 under the charge of UE1 and sends the configuration results to the base station in uplink transmission on the proprietary SRB of UE1.

In S805, when the base station needs to perform actions such as proprietary-class customization RRM parameter configuration/resource reconfiguration/mobile migration on UE2 of the grouped UEs, the related proprietary configuration information is still sent in downlink transmission on the proprietary SRB of UE2. After the user of the UE2 stops all transmission services and the proprietary SRB/DRB of the UE2 is released from the RRC connection, the UE2 automatically releases association between UE2 and the common Group-SRB, no longer receiving and analyzing the common control information on the common Group-SRB. The UE2 also automatically releases association between UE2 and the master anchor UE1.

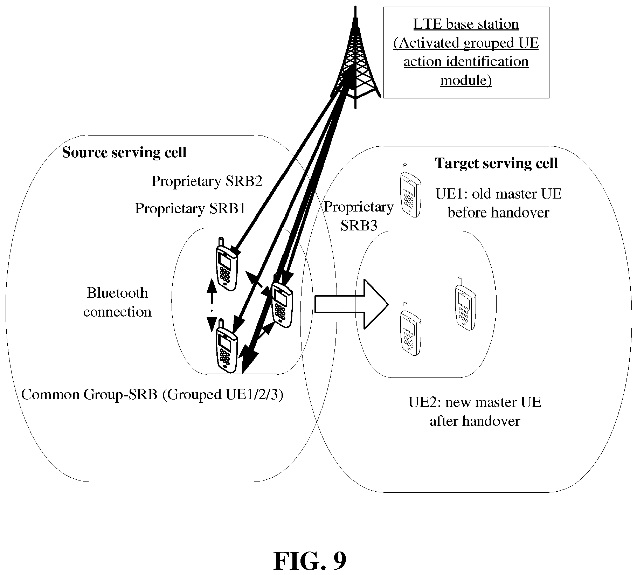

FIG. 9 is a schematic diagram 2 of a group control intra-LTE system handover of grouped UEs composed of three UEs performed by an LTE macro base station according to a preferred embodiment of the present invention. As shown in FIG. 9, under the coverage of a cell of a LTE macro base station, three UEs (UE1, UE2 and UE3) exist. The group control intra-LTE system handover is performed on the grouped UEs composed of the three UEs by the LTE macro base station. The three UEs belong to a gathering group of respective three running friends. Because of respective transmission requirements of different service data, UE1, UE2 and UE3 are already in the RRC Connected state, and are configured with different DRBs (because the data services in progress of the users are different). The LTE macro base station is configured and activated with a grouped UE action identification module based on an internal implementation. Based on the RRM measurement report information and the historical moving trajectory information of the UE1, UE2 and UE3, it is determined that the three UEs have a binding relationship in terms of spatial mobility, and therefore, it is decided to establish grouped UEs for UE1, UE2 and UE3. Specific steps are described below.

In S901, the base station uses its own implementation algorithm to select UE1 from the determined grouped UEs as the master UE serving as the auxiliary control node and the uplink control feedback anchor point for group control. The base station establishes a common Group-SRB for the grouped UEs. Related required configuration information for establishing the common Group-SRB is sent in downlink transmission on proprietary SRB1/SRB2/SRB3 configured for the three UEs respectively. The configuration information is for example resource configuration information related to LTE CCCH/DL-SCH/PDSCH corresponding to the common Group-SRB, a common ID identifier of the UE group (ID of grouped UE ID).

In S902, as time passes, the grouped UEs move physically and the macro cell handover is about to occur. At this time, the base station sends the related control information to the grouped UEs in downlink transmission on the common Group-SRB. The control information includes, but is not limited to:
configuration information of new resources of respective proprietary SRB1/SRB2/SRB3 of UE1/LTE2/LTE3 in a target cell;
configuration information of new resources of respective proprietary DRBs of UE1/UE2/UE3 in the target cell;
common-class RRM measurement report parameter configuration information of UE1/UE2/UE3; and
handover command information of UE1/UE2/UE3.

In S903, the UE group can identify that the control information on the common Group-SRB is for the UE group itself via the common ID identifier of the grouped UEs, and receive and analyze the control information on the common Group-SRB in a manner similar to the original receiving and analysis of the control information on the respective proprietary SRB. The UE group further performs actions such as RRM-related parameter reconfiguration/resource reconfiguration/mobile migration according to the control information content on the common Group-SRB, and the time for executing the result does not require complete synchronization, for example, UE1, UE2 and UE3 are sequentially handed over to the target cell.

In S904, the UE group establishes a direct local data transmission connection with the master UE through a local Bluetooth data transmission mechanism. Firstly, the result of the establishment of the new proprietary SRBs/DRBs of UE2/UE3 in the target cell is transmitted to the master anchor UE1. Then UE1 gathers all related configuration results of UE1 itself and UE2/UE3 under the charge of UE1 and sends the configuration results to the base station in uplink transmission on the proprietary SRB of UE1.

In S905, when the base station needs to perform actions such as proprietary-class customization RRM parameter configuration/resource reconfiguration/mobile migration on UE1 of the grouped UEs, the related proprietary configuration information is still sent in downlink transmission on the proprietary SRB of UE1. After the user of the master anchor UE1 actively disconnects UE1 from the original group, the UE1 automatically releases association between UE1 and the common Group-SRB, no longer receiving and analyzing the common control information on the common Group-SRB. The UE1 also automatically releases an original role of master anchor (a master UE). The base station reselects UE2 as a new master anchor (the master UE).

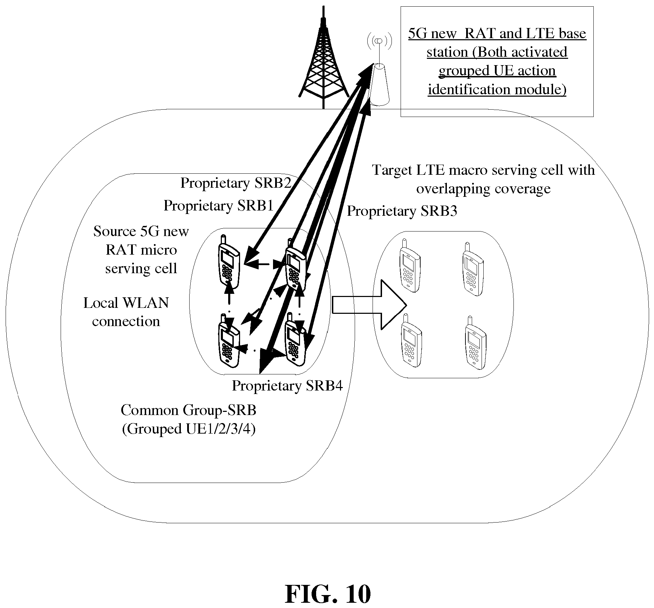

FIG. 10 is a schematic diagram of a group control inter-system handover of grouped UEs composed of four UEs performed by a 5G new RAT micro base station according to a preferred embodiment of the present invention. As shown in FIG. 10, under the overlapping coverage of a cell of the 5G new RAT micro base station and a cell of the LTE macro base station, four UEs (UE1, UE2, UE3 and UE4) exist. The four UEs are wearable terminal devices belonging to a same user. Because of respective transmission requirements of different service data, UE1, UE2, UE3 and UE4 are already in the equivalent RRC connected state with the 5G new RAT base station, and are configured with different DRBs (because the data services in progress of the UEs of the user are different). The 5G new RAT base station and the LTE macro base station are configured and activated with a grouped UE action identification module based on the internal implementation. Based on the RRM measurement report information and the historical moving trajectory information of the UE1, UE2, UE3 and UE4, it is determined that the four UEs have a binding relationship in terms of spatial mobility, and therefore, it is decided to establish grouped UEs for the UE1, UE2, UE3 and UE4. Specific steps are described below.

In S1001, the base station uses its own implementation algorithm to select UE3 from the determined grouped UEs as the master UE serving as the auxiliary control node and the uplink control feedback anchor point for group control. The base station establishes a common Group-SRB for the grouped UEs. Related required configuration information for establishing the common Group-SRB is sent in downlink transmission on proprietary SRB1/SRB2/SRB3/SRB4 configured for the four UEs respectively. The configuration information is for example resource configuration information related to the CCCH/DL-SCH/PDSCH of the 5G new RAT corresponding to the common Group-SRB, a common ID identifier of the UE group (ID of grouped UE).

In S1002, as time passes, the total data throughput of the grouped UEs decreases, and the load of the currently connected 5G new RAT source serving cell increases, therefore the 5G new RAT base station decides to perform inter-system cell handover on the grouped UEs, and a target is selected to be the LTE macro cell under the same coverage area. At this time, the 5G new RAT base station sends the related control information to the grouped UEs in downlink transmission on the common Group-SRB. The control information includes, but is not limited to:
configuration information of new resources of respective proprietary SRB 1/SRB2/SRB3/SRB4 of UE1/UE2/UE3/UE4 in a target LTE cell;
configuration information of new resources of respective proprietary DRBs of UE1/UE2/UE3/UE4 in the target LTE cell;
common-class RRM measurement report parameter configuration information of UE1/UE2/UE3/UE4; and
inter-system handover command information of UE1/UE2/UE3/UE4.

In S1003, the UE group can identify that the control information on the common Group-SRB is for the UE group itself via the common ID identifier of the grouped UEs, and receive and analyze the control information on the common Group-SRB in a manner similar to the original receiving and analysis of the control information on the respective proprietary SRB. The UE group further performs actions such as RRM-related parameter reconfiguration/resource reconfiguration/mobile migration according to the control information content on the common Group-SRB, and the time for executing the result does not require complete synchronization, for example, UE1, UE2, UE3 and UE4 are sequentially handed over to the target LTE cell.

In S1004, the UE group establishes a direct local data transmission connection with the master UE through the local WLAN data transmission mechanism. Firstly, the result of the establishment of the new proprietary SRBs/DRBs of UE1/UE2/UE4 in the target LTE cell is transmitted to the master anchor UE3. Then UE3 gathers all related configuration results of UE3 itself and UE1/UE2/UE4 under the charge of UE3 and sends the configuration results to the LTE base station in uplink transmission on the proprietary SRB of UE3.

In S1005, when the base station needs to perform actions such as proprietary-class customization RRM parameter configuration/resource reconfiguration/mobile migration on UE2 of the grouped UEs, the related proprietary configuration information is still sent in downlink transmission on the proprietary SRB of UE2. After the terminal of the UE2 stops all transmission services and the proprietary SRB/DRB of the UE2 is released from the RRC connection, the UE2 automatically releases association between UE2 and the common Group-SRB, no longer receiving and analyzing the common control information on the common Group-SRB. The UE2 also automatically releases association between UE2 and the master anchor UE3.

From the description of the implementation modes described above, it will be apparent to those skilled in the art that the method of any embodiment described above may be implemented by means of software in combination with a necessary general hardware platform, or may of course be implemented by hardware; but in many cases, the former is the preferred implementation mode. Based on this understanding, the solution provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the method according to each embodiment of the present invention.

It is to be noted that the various modules described above may be implemented by software or hardware. Implementation by hardware may, but is not limited to, be performed in the following manner: the modules described above are located in a same processor; or the modules described above are respectively located in multiple processors.

Another aspect which is not part of the invention, provides a storage medium. Optionally, the storage medium described above may be configured to store program codes for executing the steps described below.

In S1, an base station establishes a UE group (UEs) for multiple terminals in an RRC connected state.

In S2, the base station establishes a common Group-SRB for the UE group.

In S3, the base station sends configuration information for establishing the common Group-SRB to the multiple terminals in downlink transmission on multiple dedicated SRBs for respective terminals in the UE group.

In S4, the base station sends control information of the UE group in downlink transmission on the common Group-SRB.

Optionally, the storage medium described above may include, but is not limited to, a flash disk, a read-only memory (ROM), a random access memory (RAM), a mobile hard disk, a magnetic disk, an optical disk or various other media capable of storing program codes.

Optionally, in the aspect, a processor executes the steps of the method according to the program codes stored in the storage medium.

Apparently, those skilled in the art should understand that respective above-mentioned modules or steps of the present invention may be implemented by a universal computing apparatus. The modules or steps may be concentrated on a single computing apparatus or distributed on a network formed by multiple computing apparatuses; and optionally, they may be implemented by program codes executable by the computing apparatuses, so that they may be stored in a storage apparatus for execution by the computing apparatuses, and in some circumstances, the illustrated or described steps may be executed in sequences different from those described herein, or they may be made into various integrated circuit modules separately, or multiple modules or steps therein may be made into a single integrated circuit module for implementation. In this way, the present invention is not limited to any specific combination of hardware and software.

### INDUSTRIAL APPLICABILITY

As described above, the method and apparatus for controlling RRM provided by the embodiments of the present invention have the beneficial effects of solving the problem in which the control signaling for grouped UEs has same purpose and content while the control data is repeatedly transmitted on each proprietary SRB, leading to additional signaling overhead. By using a common SRB and taking advantages of characteristics of grouped UEs, a single copy of control data can be transmitted for controlling multiple UEs.

## Claims

1. A method for controlling radio resource management, RRM, comprising:
establishing (S302), by a base station, a user equipment, UE, group for a plurality of terminals in a radio resource control, RRC, connected state;
establishing (S304), by the base station, a common group signaling radio bearer, Group-SRB, for the UE group;
sending (S306), by the base station in downlink transmission, configuration information to the plurality of terminals on a plurality of dedicated SRBs for the respective terminals in the UE group, wherein the configuration information comprises configuration information for establishing the common Group-SRB; and
sending (S308), by the base station in downlink transmission, common control information of the UE group on the common Group-SRB.

2. The method of claim 1, wherein the establishing, by the base station, the UE group for the plurality of terminals in the RRC connected state comprises:
establishing, by the base station, the UE group according to common information of the plurality of terminals in the RRC connected state,
wherein the common information comprises at least one of: RRM parameter configuration information, resource consumption information, mobile migration information, and physical and logical association information.

3. The method of claim 1, after the establishing, by the base station, the UE group for the plurality of terminals in the RRC connected state, the method further comprises:
selecting, by the base station, a master UE from the plurality of terminals in the UE group, wherein the master UE is configured to be an auxiliary control node and/or an uplink control feedback gathering anchor point for group control of the plurality of terminals,
or, after the establishing, by the base station, the Group-SRB for the UE group, the method further comprises:
sending, by the base station in downlink transmission, proprietary-class customization control information to the plurality of terminals on the plurality of dedicated SRBs for the respective terminals in the UE group, wherein the proprietary-class customization control information comprises at least one of: resource reconfiguration information of the UE group, RRM parameter configuration information of the UE group, and mobile migration information of the UE group.

4. The method of claim 1, wherein the configuration information of the common Group-SRB comprises at least one of:
identifier information and resource configuration information of a common control channel, CCCH, a downlink shared channel, DL-SCH, or a physical downlink shared channel, PDSCH, corresponding to the common Group-SRB;
a common identity, ID, identifier of the UE group; and
information of a master UE, wherein the base station selects the master UE from the plurality of terminals in the UE group, the master UE is configured to be an auxiliary control node and/or an uplink control feedback gathering anchor point for group control of the plurality of terminals, or, wherein the common control information comprises at least one of: resource configuration information of the UE group, RRM parameter configuration information of the UE group, and mobile migration information of the UE group.

5. A method for controlling radio resource management, RRM, comprising:
receiving (S402), by a terminal, configuration information for establishing a common group signaling radio bearer, Group-SRB, sent by a base station in downlink transmission on a dedicated signaling radio bearer, SRB, for the terminal, wherein the common Group-SRB is established for a user equipment, UE, group containing the terminal, and the UE group comprises a plurality of terminals in a radio resource control, RRC, connected state; and
receiving (S404), by the terminal, common control information of the UE group sent by the base station in downlink transmission on the common Group-SRB.

6. The method of claim 5, wherein the configuration information of the common Group-SRB comprises at least one of:
identifier information and resource configuration information of a common control channel, CCCH, a downlink shared channel, DL-SCH, or a physical downlink shared channel, PDSCH, corresponding to the common Group-SRB;
a common identity, ID, identifier of the UE group; and
information of a master UE, wherein the base station selects the master UE from the plurality of terminals in the UE group, wherein the master UE is configured to be an auxiliary control node and/or an uplink control feedback gathering anchor point for group control of the plurality of terminals,
preferably, after the plurality of terminals in the UE group receive the common control information of the UE group sent by the base station in downlink transmission on the common Group-SRB, the method further comprises:
in a case where the terminal is a master UE, the terminal performs data transmission with other terminals among the plurality of terminals in the UE group through a local data transmission mechanism, wherein the other terminals send the control information for feedback in uplink to the master UE, the master UE gathers the control information for feedback and send the control information for feedback in uplink transmission; and
in a case where the terminal is not the master UE, the terminal performs data transmission with the master UE through the local data transmission mechanism, wherein the terminal sends the control information for feedback in uplink to the master UE, the master UE gathers the control information for feedback and sends the control information for feedback in uplink transmission.

7. The method of claim 5, after the receiving, by the terminal, the common control information of the UE group sent by the base station in downlink transmission on the common Group-SRB, the method further comprises:
performing, by the terminal, a common action according to the common control information, wherein the common action comprises at least one of: RRM parameter reconfiguration, resource reconfiguration and mobile migration, or
sending, by the terminal in uplink transmission, control information for feedback on a dedicated SRB for the terminal.

8. The method of claim 5, after the receiving, by the terminal, the common control information of the UE group sent by the base station in downlink transmission on the common Group-SRB, the method further comprises:
after a proprietary SRB for the terminal is released from radio resource connection RRC or after the terminal determines based on a specific condition that the terminal has detached from the UE group in a physical relationship or a logical relationship, releasing, by the terminal, association between the terminal and the common Group-SRB, wherein the terminal no longer receives the common control information from the common Group-SRB and no longer sends information for feedback in uplink to a master UE.

9. An apparatus for controlling radio resource management, RRM, located in a base station and comprising:
an identification module (52), which is configured to establish a user equipment, UE, group for a plurality of terminals in a radio resource control, RRC, connected state;
an establishment module (54), which is configured to establish a common group signaling radio bearer, Group-SRB, for the UE group;
a first transmission module (56), which is configured to send configuration information to the plurality of terminals in downlink transmission on a plurality of dedicated SRBs for the respective terminals in the UE group, wherein the configuration information comprises configuration information for establishing the common Group-SRB; and
a second transmission module (58), which is configured to send common control information of the UE group in downlink transmission on the common Group-SRB.

10. The apparatus of claim 9, wherein the identification module establishes the UE group according to common information of the plurality of terminals in the RRC connected state, wherein the common information comprises at least one of: RRM parameter configuration information, resource consumption information, mobile migration information, and physical and logical association information.

11. The apparatus of claim 9, further comprising:
a selection module, which is configured to select a master UE from the plurality of terminals in the UE group after the identification module establishes the UE group for the plurality of terminals in the RRC connected state, wherein the master UE is configured to be an auxiliary control node and/or an uplink control feedback gathering anchor point for group control of the plurality of terminals; or
a third transmission module, which is configured to send proprietary-class customization control information to the plurality of terminals in downlink transmission on the plurality of dedicated SRBs for the respective terminals in the UE group, wherein the proprietary-class customization control information comprises at least one of: resource reconfiguration information of the UE group, RRM parameter configuration information of the UE group, and mobile migration information of the UE group.

12. The apparatus of claim 9, wherein the configuration information of the common Group-SRB comprises at least one of:
identifier information and resource configuration information of a common control channel, CCCH, a downlink shared channel, DL-SCH, or a physical downlink shared channel, PDSCH, corresponding to the common Group-SRB;
a common identity, ID, identifier of the UE group; and
information of a master UE, wherein the base station selects the master UE from the plurality of terminals in the UE group, the master UE is configured to be an auxiliary control node and/or an uplink control feedback gathering anchor point for group control of the plurality of terminals, or, wherein the common control information comprises at least one of: resource configuration information of the UE group, RRM parameter configuration information of the UE group, and mobile migration information of the UE group.

13. An apparatus for controlling radio resource management, RRM, located in a terminal and comprising:
a first receiving module (62), which is configured to receive configuration information for establishing a common group signaling radio bearer, Group-SRB, sent by a base station in downlink transmission on a dedicated signaling radio bearer, SRB, for the terminal, wherein the common Group-SRB is established for a user equipment, UE, group containing the terminal, and the UE group comprises a plurality of terminals in a radio resource control, RRC, connected state; and
a second receiving module (64), which is configured to receive common control information of the UE group sent by the base station in downlink transmission on the common Group-SRB.

14. The apparatus of claim 13, wherein the configuration information of the common Group-SRB comprises at least one of:
identifier information and resource configuration information of a common control channel, CCCH, a downlink shared channel, DL-SCH, or a physical downlink shared channel, PDSCH, corresponding to the common Group-SRB;
a common identity, ID, identifier of the UE group; and
information of a master UE, wherein the base station selects the master UE from the plurality of terminals in the UE group, wherein the master UE is configured to be an auxiliary control node and/or an uplink control feedback gathering anchor point for group control of the plurality of terminals,
preferably, the apparatus further comprises:
a local transmission module, which is configured to: after the plurality of terminals in the UE group receive the common control information of the UE group sent by the base station in downlink transmission on the common Group-SRB,
in a case where the terminal is a master UE, enable the terminal to perform data transmission with other terminals among the plurality of terminals in the UE group through a local data transmission mechanism, wherein the other terminals send the control information for feedback in uplink to the master UE, the master UE gathers the control information for feedback and sends the control information for feedback in uplink transmission; and
in a case where the terminal is not the master UE, enable the terminal to perform data transmission with the master UE through the local data transmission mechanism, wherein the terminal sends the control information for feedback in uplink to the master UE, the master UE gathers the control information for feedback and sends the control information for feedback in uplink transmission.

15. The apparatus of claim 13, further comprising:
a common action module, which is configured to perform a common action according to the common control information after the second receiving module receives the common control information of the UE group sent by the base station in downlink transmission on the common Group-SRB, wherein the common action comprises at least one of: RRM parameter reconfiguration, resource reconfiguration and mobile migration; or
an uplink transmission module, which is configured to send control information for feedback in uplink transmission on the dedicated SRB of the terminal after the second receiving module receives the common control information of the UE group sent by the base station in downlink transmission on the common Group-SRB; or
a releasing module, which is configured to: after the terminal receives the common control information of the UE group sent by the base station in downlink transmission on the common Group-SRB,
after a proprietary SRB for the terminal is released from the radio resource connection RRC or after the terminal determines based on a specific condition that the terminal has detached from the UE group in a physical relationship or a logical relationship, enable the terminal to release association between the terminal and the common Group-SRB, where the terminal no longer receives the common control information from the common Group-SRB and no longer sends information for feedback in uplink to a master UE.

## Patentansprüche

1. Verfahren zum Steuern einer Funkressourcenverwaltung (Radio Resource Management - RRM), das Folgendes umfasst:
Einrichten (S302) einer Gruppe von Benutzergeräten (User Equipment - UE) durch eine Basisstation für eine Vielzahl von Endgeräten in einem Verbindungszustand (connected state) der Funkressourcensteuerung (Radio Resource Control - RRC);
Einrichten (S304) eines gemeinsamen Signalisierungsfunkträgers (Signaling Radio Bearer - SRB) der Gruppe (Gruppen-SRB) für die UE-Gruppe durch die Basisstation;
Senden (S306) von Konfigurationsinformationen an die Vielzahl von Endgeräten auf einer Vielzahl von dedizierten SRBs für die jeweiligen Endgeräte in der UE-Gruppe durch die Basisstation in einer Downlink-Übertragung, wobei die Konfigurationsinformationen Konfigurationsinformationen zum Einrichten des gemeinsamen Gruppen-SRB umfassen; und
Senden (S308) gemeinsamer Steuerinformationen der UE-Gruppe auf dem gemeinsamen Gruppen-SRB durch die Basisstation in der Downlink-Übertragung.

2. Verfahren nach Anspruch 1, wobei das Einrichten der UE-Gruppe für die Vielzahl von Endgeräten in dem RRC-Verbindungszustand durch die Basisstation Folgendes umfasst: Einrichten der UE-Gruppe durch die Basisstation gemäß gemeinsamer Informationen der Vielzahl von Endgeräten in dem RRC-Verbindungszustand, wobei die gemeinsamen Informationen mindestens eines von Folgenden umfassen: RRM-Parameterkonfigurationsinformationen, Ressourcenverbrauchsinformationen, Mobilmigrationsinformationen und physischen und logischen Verbindungsinformationen.

3. Verfahren nach Anspruch 1, wobei das Verfahren nach dem Einrichten der UE-Gruppe für die Vielzahl von Endgeräten im RRC-Verbindungszustand durch die Basisstation ferner Folgendes umfasst:
Auswählen eines Master-UE aus der Vielzahl von Endgeräten in der UE-Gruppe durch die Basisstation, wobei das Master-UE dazu konfiguriert ist, ein Hilfssteuerknoten und/oder ein Ankerpunkt zum Sammeln von Uplink-Steuerungsfeedback zur Gruppensteuerung der Vielzahl von Endgeräten zu sein,
oder wobei das Verfahren nach dem Einrichten des Gruppen-SRB für die UE-Gruppe durch die Basisstation ferner Folgendes umfasst: Senden von Anpassungssteuerinformationen einer proprietären Klasse an die Vielzahl von Endgeräten auf der Vielzahl von dedizierten SRBs für die jeweiligen Endgeräte in der UE-Gruppe durch die Basisstation in der Downlink-Übertragung, wobei die Anpassungssteuerinformationen der proprietären Klasse mindestens eines von Folgenden umfassen: Ressourcenrekonfigurationsinformationen der UE-Gruppe, RRM-Parameterkonfigurationsinformationen der UE-Gruppe und Mobilmigrationsinformationen der UE-Gruppe.

4. Verfahren nach Anspruch 1, wobei die Konfigurationsinformationen des gemeinsamen Gruppen-SRB mindestens eines der Folgenden umfassen:
Kennungsinformationen und Ressourcenkonfigurationsinformationen eines gemeinsamen Steuerkanals (Common Control Channel - CCCH), eines gemeinsam genutzten Downlink-Kanals (Downlink Shared Channel - DL-SCH) oder eines physischen gemeinsam genutzten Downlink-Kanals (PDSCH), der dem gemeinsamen Gruppen-SRB entspricht;
eine gemeinsame Identitäts-(ID-)Kennung der UE-Gruppe; und Informationen eines Master-UE, wobei die Basisstation das Master-UE aus der Vielzahl von Endgeräten in der UE-Gruppe auswählt, das Master-UE dazu konfiguriert ist, ein Hilfssteuerknoten und/oder ein Ankerpunkt zum Sammeln von Uplink-Steuerungsfeedback für die Gruppensteuerung der Vielzahl von Endgeräten zu sein, oder wobei die gemeinsamen Steuerinformationen mindestens eines von Folgenden umfassen: Ressourcenkonfigurationsinformationen der UE-Gruppe, RRM-Parameterkonfigurationsinformationen der UE-Gruppe und Mobilmigrationsinformationen der UE-Gruppe.

5. Verfahren zum Steuern der Funkressourcenverwaltung (RRM), das Folgendes umfasst:
Empfangen (S402) von Konfigurationsinformationen zum Einrichten eines gemeinsamen Gruppen-Signalisierungsfunkträgers (Gruppen-SRB), der von einer Basisstation in einer Downlink-Übertragung auf einem dedizierten Signalisierungsfunkträger (SRB) für das Endgerät gesendet wird, durch ein Endgerät, wobei der gemeinsame Gruppen-SRB für eine Benutzergeräte-(UE)Gruppe eingerichtet wird, die das Endgerät enthält, und die UE-Gruppe eine Vielzahl von Endgeräten in einem Verbindungszustand der Funkressourcensteuerung (RRC) umfasst; und
Empfangen (S404) von gemeinsamen Steuerinformationen der UE-Gruppe, die von der Basisstation in der Downlink-Übertragung auf dem gemeinsamen Gruppen-SRB gesendet werden, durch das Endgerät.

6. Verfahren nach Anspruch 5, wobei die Konfigurationsinformationen des gemeinsamen Gruppen-SRB mindestens eines der Folgenden umfassen:
Kennungsinformationen und Ressourcenkonfigurationsinformationen eines gemeinsamen Steuerkanals (CCCH), eines gemeinsam genutzten Downlink-Kanals (DL-SCH) oder eines physischen gemeinsam genutzten Downlink-Kanals (PDSCH), der dem gemeinsamen Gruppen-SRB entspricht;
eine gemeinsame Identitäts-(ID-)Kennung der UE-Gruppe; und
Informationen eines Master-UE, wobei die Basisstation das Master-UE aus der Vielzahl von Endgeräten in der UE-Gruppe auswählt, wobei das Master-UE dazu konfiguriert ist, ein Hilfssteuerknoten und/oder ein Ankerpunkt zum Sammeln von Uplink-Steuerungsfeedback für die Gruppensteuerung der Vielzahl von Endgeräten zu sein,
nachdem die Vielzahl von Endgeräten in der UE-Gruppe die gemeinsamen Steuerinformationen der UE-Gruppe, die von der Basisstation in der Downlink-Übertragung auf dem gemeinsamen Gruppen-SRB gesendet wurden, empfangen hat, umfasst das Verfahren vorzugsweise ferner Folgendes:
in einem Fall, in dem das Endgerät ein Master-UE ist, führt das Endgerät eine Datenübertragung mit anderen Endgeräten aus der Vielzahl von Endgeräten in der UE-Gruppe durch einen lokalen Datenübertragungsmechanismus durch, wobei die anderen Endgeräte die Steuerinformationen für das Feedback im Uplink an das Master-UE senden, das Master-UE die Steuerinformationen für das Feedback sammelt und die Steuerinformationen für das Feedback in der Uplink-Übertragung sendet; und
in einem Fall, in dem das Endgerät nicht das Master-UE ist, führt das Endgerät eine Datenübertragung mit dem Master-UE durch den lokalen Datenübertragungsmechanismus durch, wobei das Endgerät die Steuerinformationen für das Feedback im Uplink an das Master-UE sendet, das Master-UE die Steuerinformationen für das Feedback sammelt und die Steuerinformationen für das Feedback in der Uplink-Übertragung sendet.

7. Verfahren nach Anspruch 5, wobei das Verfahren nach dem Empfangen der gemeinsamen Steuerinformationen der UE-Gruppe, die von der Basisstation in der Downlink-Übertragung auf dem gemeinsamen Gruppen-SRB gesendet wurden, durch das Endgerät, ferner Folgendes umfasst:
Ausführen einer gemeinsamen Aktion gemäß den gemeinsamen Steuerinformationen durch das Endgerät, wobei die gemeinsame Aktion mindestens eines der Folgenden umfasst: RRM-Parameterrekonfiguration, Ressourcenrekonfiguration und Mobilmigration oder
Senden von Steuerinformationen für das Feedback auf einem dedizierten SRB für das Endgerät durch das Endgerät.

8. Verfahren nach Anspruch 5, wobei das Verfahren nach dem Empfangen der gemeinsamen Steuerinformationen der UE-Gruppe, die von der Basisstation in der Downlink-Übertragung auf dem gemeinsamen Gruppen-SRB gesendet wurden, durch das Endgerät ferner Folgendes umfasst:
nachdem ein proprietärer SRB für das Endgerät von der Funkressourcenverbindung RRC freigegeben wurde oder nachdem das Endgerät basierend auf einer spezifischen Bedingung bestimmt hat, dass sich das Endgerät von der UE-Gruppe in einer physischen Beziehung oder einer logischen Beziehung gelöst hat, Freigeben der Verbindung zwischen dem Endgerät und dem gemeinsamen Gruppen-SRB durch das Endgerät, wobei das Endgerät die gemeinsamen Steuerinformationen von dem gemeinsamen Gruppen-SRB nicht mehr empfängt und keine Informationen mehr für das Feedback im Uplink an ein Master-UE sendet.

9. Vorrichtung zum Steuern der Funkressourcenverwaltung (RRM), die sich in einer Basisstation befindet und Folgendes umfasst:
ein Identifikationsmodul (52), das dazu konfiguriert ist, eine Gruppe von Benutzergeräten (UE) für eine Vielzahl von Endgeräten in einem Verbindungszustand der Funkressourcensteuerung (RRC) einzurichten;
ein Einrichtungsmodul (54), das dazu konfiguriert ist, einen gemeinsamen Signalisierungsfunkträger der Gruppe (Gruppen-SRB) für die UE-Gruppe einzurichten;
ein erstes Übertragungsmodul (56), das dazu konfiguriert ist, Konfigurationsinformationen an die Vielzahl von Endgeräten auf einer Vielzahl von dedizierten SRBs für die jeweiligen Endgeräte in der UE-Gruppe in einer Downlink-Übertragung zu senden, wobei die Konfigurationsinformationen Konfigurationsinformationen zum Einrichten des gemeinsamen Gruppen-SRB umfassen; und
ein zweites Übertragungsmodul (58), das dazu konfiguriert ist, gemeinsame Steuerinformationen der UE-Gruppe auf dem gemeinsamen Gruppen-SRB in der Downlink-Übertragung zu senden.

10. Vorrichtung nach Anspruch 9, wobei das Identifikationsmodul die UE-Gruppe gemäß gemeinsamer Informationen der Vielzahl von Endgeräten in dem RRC-Verbindungszustand einrichtet, wobei die gemeinsamen Informationen mindestens eines von Folgenden umfassen: RRM-Parameterkonfigurationsinformationen, Ressourcenverbrauchsinformationen, Mobilmigrationsinformationen und physischen und logischen Verbindungsinformationen.

11. Vorrichtung nach Anspruch 9, die ferner Folgendes umfasst:
ein Auswahlmodul, das dazu konfiguriert ist, ein Master-UE aus der Vielzahl von Endgeräten in der UE-Gruppe auszuwählen, nachdem das Identifikationsmodul die UE-Gruppe für die Vielzahl von Endgeräten in dem RRC-Verbindungszustand eingerichtet hat, wobei das Master-UE dazu konfiguriert ist, ein Hilfssteuerknoten und/oder ein Ankerpunkt zum Sammeln von Uplink-Steuerungsfeedback zur Gruppensteuerung der Vielzahl von Endgeräten zu sein; oder
ein drittes Übertragungsmodul, das dazu konfiguriert ist, Anpassungssteuerinformationen einer proprietären Klasse an die Vielzahl von Endgeräten auf der Vielzahl von dedizierten SRBs für die jeweiligen Endgeräte in der UE-Gruppe in der Downlink-Übertragung zu senden, wobei die Anpassungssteuerinformationen der proprietären Klasse mindestens eines von Folgenden umfassen: Ressourcenrekonfigurationsinformationen der UE-Gruppe, RRM-Parameterkonfigurationsinformationen der UE-Gruppe und Mobilmigrationsinformationen der UE-Gruppe.

12. Vorrichtung nach Anspruch 9, wobei die Konfigurationsinformationen des gemeinsamen Gruppen-SRB mindestens eines der Folgenden umfassen:
Kennungsinformationen und Ressourcenkonfigurationsinformationen eines gemeinsamen Steuerkanals (CCCH), eines gemeinsam genutzten Downlink-Kanals (DL-SCH) oder eines physischen gemeinsam genutzten Downlink-Kanals (PDSCH), der dem gemeinsamen Gruppen-SRB entspricht;
eine gemeinsame Identitäts-(ID-)Kennung der UE-Gruppe; und Informationen eines Master-UE, wobei die Basisstation das Master-UE aus der Vielzahl von Endgeräten in der UE-Gruppe auswählt, das Master-UE dazu konfiguriert ist, ein Hilfssteuerknoten und/oder ein Ankerpunkt zum Sammeln von Uplink-Steuerungsfeedback für die Gruppensteuerung der Vielzahl von Endgeräten zu sein, oder wobei die gemeinsamen Steuerinformationen mindestens eines von Folgenden umfassen: Ressourcenkonfigurationsinformationen der UE-Gruppe, RRM-Parameterkonfigurationsinformationen der UE-Gruppe und Mobilmigrationsinformationen der UE-Gruppe.

13. Vorrichtung zum Steuern der Funkressourcenverwaltung (RRM), die sich in einem Endgerät befindet und Folgendes umfasst:
ein erstes Empfangsmodul (62), das dazu konfiguriert ist, Konfigurationsinformationen zum Einrichten eines gemeinsamen Gruppen-Signalisierungsfunkträgers (Gruppen-SRB), der von einer Basisstation in einer Downlink-Übertragung auf einem dedizierten Signalisierungsfunkträger (SRB) für das Endgerät gesendet wird, zu empfangen, wobei der gemeinsame Gruppen-SRB für eine Gruppe von Benutzergeräten (UE) eingerichtet wird, die das Endgerät enthält, und die UE-Gruppe eine Vielzahl von Endgeräten in einem Verbindungszustand der Funkressourcensteuerung (RRC) umfasst; und
ein zweites Empfangsmodul (64), das dazu konfiguriert ist, gemeinsame Steuerinformationen der UE-Gruppe, die von der Basisstation in der Downlink-Übertragung auf dem gemeinsamen Gruppen-SRB gesendet werden, zu empfangen.

14. Vorrichtung nach Anspruch 13, wobei die Konfigurationsinformationen des gemeinsamen Gruppen-SRB mindestens eines der Folgenden umfassen:
Kennungsinformationen und Ressourcenkonfigurationsinformationen eines gemeinsamen Steuerkanals (CCCH), eines gemeinsam genutzten Downlink-Kanals (DL-SCH) oder eines physischen gemeinsam genutzten Downlink-Kanals (PDSCH), der dem gemeinsamen Gruppen-SRB entspricht;
eine gemeinsame Identitäts-(ID-)Kennung der UE-Gruppe; und Informationen eines Master-UE, wobei die Basisstation das Master-UE aus der Vielzahl von Endgeräten in der UE-Gruppe auswählt, wobei das Master-UE dazu konfiguriert ist, ein Hilfssteuerknoten und/oder ein Ankerpunkt zum Sammeln von Uplink-Steuerungsfeedback für die Gruppensteuerung der Vielzahl von Endgeräten zu sein,
vorzugsweise umfasst die Vorrichtung ferner Folgendes:
ein lokales Übertragungsmodul, das dazu konfiguriert ist: nachdem die Vielzahl von Endgeräten in der UE-Gruppe die gemeinsamen Steuerinformationen der UE-Gruppe, die von der Basisstation in der Downlink-Übertragung auf dem gemeinsamen Gruppen-SRB gesendet wurden, empfangen hat,
in einem Fall, in dem das Endgerät ein Master-UE ist, dem Endgerät zu ermöglichen, eine Datenübertragung mit anderen Endgeräten aus der Vielzahl von Endgeräten in der UE-Gruppe durch einen lokalen Datenübertragungsmechanismus durchzuführen, wobei die anderen Endgeräte die Steuerinformationen für das Feedback im Uplink an das Master-UE senden, das Master-UE die Steuerinformationen für das Feedback sammelt und die Steuerinformationen für das Feedback in der Uplink-Übertragung sendet; und
in einem Fall, in dem das Endgerät nicht das Master-UE ist, dem Endgerät zu ermöglichen, eine Datenübertragung mit dem Master-UE durch den lokalen Datenübertragungsmechanismus durchzuführen, wobei das Endgerät die Steuerinformationen für das Feedback im Uplink an das Master-UE sendet, das Master-UE die Steuerinformationen für das Feedback sammelt und die Steuerinformationen für das Feedback in der Uplink-Übertragung sendet.

15. Vorrichtung nach Anspruch 13, die ferner Folgendes umfasst:
Modul für gemeinsame Aktionen, das dazu konfiguriert ist, eine gemeinsame Aktion gemäß den gemeinsamen Steuerinformationen durchzuführen, nachdem das zweite Empfangsmodul die gemeinsamen Steuerinformationen der UE-Gruppe, die von der Basisstation in der Downlink-Übertragung auf dem gemeinsamen Gruppen-SRB gesendet wurden, empfangen hat, wobei die gemeinsame Aktion mindestens eines der Folgenden umfasst: RRM-Parameterrekonfiguration, Ressourcenrekonfiguration und Mobilmigration; oder
ein Uplink-Übertragungsmodul, das dazu konfiguriert ist, Steuerinformationen für das Feedback in der Uplink-Übertragung auf einem dedizierten SRB des Endgeräts zu senden, nachdem das zweite Empfangsmodul die gemeinsamen Steuerinformationen der UE-Gruppe, die von der Basisstation in der Downlink-Übertragung auf dem gemeinsamen Gruppen-SRB gesendet wurden, empfangen hat; oder ein Freigabemodul, das zu Folgendem konfiguriert ist: nachdem das Endgerät die gemeinsamen Steuerinformationen der UE-Gruppe, die von der Basisstation in der Downlink-Übertragung auf dem gemeinsamen Gruppen-SRB gesendet wurden, empfangen hat,
nachdem ein proprietärer SRB für das Endgerät von der Funkressourcenverbindung RRC freigegeben wurde oder nachdem das Endgerät basierend auf einer spezifischen Bedingung bestimmt hat, dass sich das Endgerät von der UE-Gruppe in einer physischen Beziehung oder einer logischen Beziehung gelöst hat, dem Endgerät zu ermöglichen, die Verbindung zwischen dem Endgerät und dem gemeinsamen Gruppen-SRB freizugeben, wobei das Endgerät die gemeinsamen Steuerinformationen von dem gemeinsamen Gruppen-SRB nicht mehr empfängt und keine Informationen mehr für das Feedback im Uplink an ein Master-UE sendet.

## Revendications

1. Procédé de commande de gestion de ressource radio, RRM, comprenant :
l'établissement (S302), par une station de base, d'un groupe d'équipements utilisateurs, UE, pour une pluralité de terminaux dans un état connecté de commande de ressource radio, RRC ;
l'établissement (S304), par la station de base, d'un support radio de signalisation de groupe, Group-SRB, commun pour le groupe d'UE ;
l'envoi (S306), par la station de base en transmission descendante, d'informations de configuration à la pluralité de terminaux sur une pluralité de SRB dédiés pour les terminaux respectifs dans le groupe d'UE, dans lequel les informations de configuration comprennent des informations de configuration pour établir le Group-SRB commun ; et
l'envoi (S308), par la station de base en transmission descendante, d'informations de commande communes du groupe d'UE sur le Group-SRB commun.

2. Procédé selon la revendication 1, dans lequel l'établissement, par la station de base, du groupe d'UE pour la pluralité de terminaux dans l'état connecté de RRC comprend : l'établissement, par la station de base, du groupe d'UE selon les informations communes de la pluralité de terminaux dans l'état connecté de RRC, dans lequel les informations communes comprennent au moins l'une : d'informations de configuration de paramètre RRM, d'informations de consommation de ressources, d'informations de migration mobile et d'informations d'associations physiques et logiques.

3. Procédé selon la revendication 1, après l'établissement, par la station de base, du groupe d'UE pour la pluralité de terminaux dans l'état connecté de RRC, le procédé comprend en outre :
la sélection, par la station de base, d'un UE maître parmi la pluralité de terminaux dans le groupe d'UE, dans lequel l'UE maître est configuré pour être un nœud de commande auxiliaire et/ou un point d'ancrage de collecte de rétroaction de commande de liaison montante pour la commande de groupe de la pluralité de terminaux , ou, après l'établissement, par la station de base, du Group-SRB pour le groupe d'UE, le procédé comprend en outre :
l'envoi, par la station de base en transmission descendante, d'informations de commande de personnalisation de classe propriétaire à la pluralité de terminaux sur la pluralité de SRB dédiés pour les terminaux respectifs dans le groupe d'UE, dans lequel les informations de commande de personnalisation de classe propriétaire comprennent au moins l'une : d'informations de reconfiguration de ressources du groupe d'UE, d'informations de configuration de paramètre RRM du groupe d'UE et d'informations de migration mobile du groupe d'UE.

4. Procédé selon la revendication 1, dans lequel les informations de configuration du Group-SRB commun comprennent au moins l'un :
d'informations d'identifiant et d'informations de configuration de ressources d'un canal de commande commun, CCCH, d'un canal partagé de liaison descendante, DL-SCH, ou d'un canal partagé de liaison descendante physique, PDSCH, correspondant au Group-SRB commun ;
d'un identifiant, ID, d'identité commune du groupe d'UE ; et d'informations d'un UE maître, dans lequel la station de base sélectionne l'UE maître parmi la pluralité de terminaux dans le groupe d'UE, l'UE maître est configuré pour être un nœud de commande auxiliaire et/ou un point d'ancrage de collecte de rétroaction de commande de liaison montante pour la commande de groupe de la pluralité de terminaux, ou, dans lequel les informations de commande communes comprennent au moins l'une : d'informations de configuration de ressources du groupe d'UE, d'informations de configuration de paramètre RRM du groupe d'UE, et d'informations de migration mobile du groupe d'UE.

5. Procédé de commande de gestion de ressource radio, RRM, comprenant :
la réception (S402), par un terminal, d'informations de configuration pour établir un support radio de signalisation de groupe commun, Group-SRB, envoyées par une station de base en transmission descendante sur un support radio de signalisation dédié, SRB, pour le terminal, dans lequel le Group-SRB est établi pour un groupe d'équipements utilisateurs, UE, contenant le terminal, et le groupe d'UE comprend une pluralité de terminaux dans un état connecté de commande de ressource radio, RRC ; et la réception (S404), par le terminal, d'informations de commande communes du groupe d'UE envoyées par la station de base en transmission descendante sur le Group-SRB commun.

6. Procédé selon la revendication 5, dans lequel les informations de configuration du Group-SRB commun comprennent au moins l'un :
d'informations d'identifiant et d'informations de configuration de ressources d'un canal de commande commun, CCCH, d'un canal partagé de liaison descendante, DL-SCH, ou d'un canal partagé de liaison descendante physique, PDSCH, correspondant au Group-SRB commun ;
d'un identifiant, ID, d'identité commune du groupe d'UE ; et d'informations d'un UE maître, dans lequel la station de base sélectionne l'UE maître parmi la pluralité de terminaux dans le groupe d'UE, dans lequel l'UE maître est configuré pour être un nœud de commande auxiliaire et/ou un point d'ancrage de collecte de rétroaction de commande de liaison montante pour la commande de groupe de la pluralité de terminaux, de préférence, après que la pluralité de terminaux dans le groupe d'UE a reçu les informations de commande communes du groupe d'UE envoyées par la station de base en transmission descendante sur le Group-SRB commun, le procédé comprend en outre :
dans le cas où le terminal est un UE maître, le terminal effectue une transmission de données avec d'autres terminaux parmi la pluralité de terminaux dans le groupe d'UE via un mécanisme local de transmission de données, dans lequel les autres terminaux envoient les informations de commande pour rétroaction en liaison montante vers l'UE maître, l'UE maître collecte les informations de commande pour rétroaction et envoie les informations de commande pour rétroaction en transmission montante ; et
dans le cas où le terminal n'est pas l'UE maître, le terminal effectue une transmission de données avec l'UE maître via le mécanisme local de transmission de données, dans lequel le terminal envoie les informations de commande pour rétroaction en liaison montante vers l'UE maître, l'UE maître collecte les informations de commande pour rétroaction et envoie les informations de commande pour rétroaction en transmission montante.

7. Procédé selon la revendication 5, après la réception, par le terminal, des informations de commande communes du groupe d'UE envoyées par la station de base en transmission descendante sur le Group-SRB commun, le procédé comprend en outre :
la réalisation, par le terminal, d'une action commune selon les informations de commande communes, dans lequel l'action commune comprend au moins l'une : d'une reconfiguration des paramètres RRM, d'une reconfiguration des ressources et d'une migration mobile, ou
l'envoi, par le terminal en transmission montante, d'informations de commande pour rétroaction sur un SRB dédié pour le terminal.

8. Procédé selon la revendication 5, après la réception, par le terminal, des informations de commande communes du groupe d'UE envoyées par la station de base en transmission descendante sur le Group-SRB commun, le procédé comprend en outre :
après qu'un SRB propriétaire pour le terminal a été libéré de la connexion de ressource radio RRC ou après que le terminal a déterminé, sur la base d'une condition spécifique, que le terminal s'est détaché du groupe d'UE dans une relation physique ou une relation logique, la libération, par le terminal, d'une association entre le terminal et le Group-SRB commun, dans lequel le terminal ne reçoit plus les informations de commande communes du Group-SRB commun et n'envoie plus d'informations pour rétroaction en liaison montante vers un UE maître.

9. Appareil de commande de gestion de ressource radio, RRM, situé dans une station de base et comprenant :
un module d'identification (52), qui est configuré pour établir un groupe d'équipements utilisateurs, UE, pour une pluralité de terminaux dans un état connecté de commande de ressource radio, RRC ;
un module d'établissement (54), qui est configuré pour établir un support radio de signalisation de groupe commun, Group-SRB, pour le groupe d'UE ;
un premier module de transmission (56), qui est configuré pour envoyer des informations de configuration à la pluralité de terminaux en transmission descendante sur une pluralité de SRB dédiés pour les terminaux respectifs dans le groupe d'UE, dans lequel les informations de configuration comprennent des informations de configuration pour établir le Group-SRB commun ; et
un deuxième module de transmission (58), qui est configuré pour envoyer des informations de commande communes du groupe d'UE en transmission descendante sur le Group-SRB commun.

10. Appareil selon la revendication 9, dans lequel le module d'identification établit le groupe d'UE selon les informations communes de la pluralité de terminaux dans l'état connecté RRC, dans lequel les informations communes comprennent au moins l'une : d'informations de configuration de paramètre RRM, d'informations de consommation de ressources, d'informations de migration mobile et d'informations d'associations physiques et logiques.

11. Appareil selon la revendication 9, comprenant en outre :
un module de sélection, qui est configuré pour sélectionner un UE maître parmi la pluralité de terminaux dans le groupe d'UE après que le module d'identification a établi le groupe d'UE pour la pluralité de terminaux dans l'état connecté RRC, dans lequel l'UE maître est configuré pour être un nœud de commande auxiliaire et/ou un point d'ancrage de collecte de rétroaction de commande de liaison montante pour la commande de groupe de la pluralité de terminaux ; ou
un troisième module de transmission, qui est configuré pour envoyer des informations de commande de personnalisation de classe propriétaire à la pluralité de terminaux en transmission descendante sur la pluralité de SRB dédiés pour les terminaux respectifs dans le groupe d'UE, dans lequel les informations de commande de personnalisation de classe propriétaire comprennent au moins l'une : d'informations de reconfiguration de ressources du groupe d'UE, d'informations de configuration de paramètre RRM du groupe d'UE et d'informations de migration mobile du groupe d'UE.

12. Appareil selon la revendication 9, dans lequel les informations de configuration du Group-SRB commun comprennent au moins l'un :
d'informations d'identifiant et d'informations de configuration de ressources d'un canal de commande commun, CCCH, d'un canal partagé de liaison descendante, DL-SCH, ou d'un canal partagé de liaison descendante physique, PDSCH, correspondant au Group-SRB commun ;
d'un identifiant, ID, d'identité commune du groupe d'UE ; et d'informations d'un UE maître, dans lequel la station de base sélectionne l'UE maître parmi la pluralité de terminaux dans le groupe d'UE, l'UE maître est configuré pour être un nœud de commande auxiliaire et/ou un point d'ancrage de collecte de rétroaction de commande de liaison montante pour la commande de groupe de la pluralité de terminaux, ou, dans lequel les informations de commande communes comprennent au moins l'une : d'informations de configuration de ressources du groupe d'UE, d'informations de configuration de paramètre RRM du groupe d'UE, et d'informations de migration mobile du groupe d'UE.

13. Appareil de commande de gestion de ressource radio, RRM, situé dans un terminal et comprenant :
un premier module de réception (62), qui est configuré pour recevoir des informations de configuration pour établir un support radio de signalisation de groupe commun, Group-SRB, envoyées par une station de base en transmission descendante sur un support radio de signalisation dédié, SRB, pour le terminal, dans lequel le Group-SRB est établi pour un groupe d'équipements utilisateurs, UE, contenant le terminal, et le groupe d'UE comprend une pluralité de terminaux dans un état connecté de commande de ressource radio, RRC ; et
un deuxième module de réception (64), qui est configuré pour recevoir des informations de commande communes du groupe d'UE envoyées par la station de base en transmission descendante sur le Group-SRB commun.

14. Appareil selon la revendication 13, dans lequel les informations de configuration du Group-SRB commun comprennent au moins l'un :
d'informations d'identifiant et d'informations de configuration de ressources d'un canal de commande commun, CCCH, d'un canal partagé de liaison descendante, DL-SCH, ou d'un canal partagé de liaison descendante physique, PDSCH, correspondant au Group-SRB commun ;
d'un identifiant, ID, d'identité commune du groupe d'UE ; et d'informations d'un UE maître, dans lequel la station de base sélectionne l'UE maître parmi la pluralité de terminaux dans le groupe d'UE, dans lequel l'UE maître est configuré pour être un nœud de commande auxiliaire et/ou un point d'ancrage de collecte de rétroaction de commande de liaison montante pour la commande de groupe de la pluralité de terminaux,
de préférence, l'appareil comprend en outre :
un module de transmission local, qui est configuré pour : après que la pluralité de terminaux dans le groupe d'UE a reçu les informations de commande communes du groupe d'UE envoyées par la station de base en transmission descendante sur le Group-SRB commun,
dans le cas où le terminal est un UE maître, permettre au terminal d'effectuer une transmission de données avec d'autres terminaux parmi la pluralité de terminaux dans le groupe d'UE via un mécanisme local de transmission de données, dans lequel les autres terminaux envoient les informations de commande pour rétroaction en liaison montante à l'UE maître, l'UE maître collecte les informations de commande pour rétroaction et envoie les informations de commande pour rétroaction en transmission montante ; et
dans le cas où le terminal n'est pas l'UE maître, permettre au terminal d'effectuer une transmission de données avec l'UE maître via le mécanisme local de transmission de données, dans lequel le terminal envoie les informations de commande pour rétroaction en liaison montante vers l'UE maître, l'UE maître collecte les informations de commande pour un retour et envoie les informations de commande pour rétroaction en transmission montante.

15. Appareil selon la revendication 13, comprenant en outre :
un module d'action commune, qui est configuré pour effectuer une action commune selon les informations de commande communes après que le deuxième module de réception a reçu les informations de commande communes du groupe d'UE envoyées par la station de base en transmission descendante sur le Group-SRB commun, dans lequel l'action commune comprend au moins l'une : d'une reconfiguration des paramètres RRM, d'une reconfiguration des ressources et d'une migration mobile ; ou
un module de transmission de liaison montante, qui est configuré pour envoyer des informations de commande pour rétroaction en transmission montante sur le SRB dédié du terminal après que le deuxième module de réception a reçu les informations de commande communes du groupe d'UE envoyées par la station de base en transmission descendante sur le Group-SRB commun ; ou
un module de libération, qui est configuré pour : après que le terminal a reçu les informations de commande communes du groupe d'UE envoyées par la station de base en transmission descendante sur le Group-SRB commun,
après qu'un SRB propriétaire pour le terminal est libéré de la connexion de ressource radio RRC ou après que le terminal a déterminé, sur la base d'une condition spécifique, que le terminal s'est détaché du groupe d'UE dans une relation physique ou une relation logique, permettre au terminal de libérer une association entre le terminal et le Group-SRB commun, où le terminal ne reçoit plus les informations de commande communes du Group-SRB commun et n'envoie plus d'informations pour rétroaction en liaison montante vers un UE maître.
